# EUROPÄISCHE PATENTANMELDUNG

(11) **EP 4 340 134 A1**
(43) Veröffentlichungstag der Anmeldung: **20.03.2024**
(21) Anmeldenummer: 23194751.6
(22) Anmeldetag: 01.09.2023
(51) Int. Cl.: H01R 11/05, H01R 12/70, H01R 12/71, H01R 13/10, H01R 13/24, H02K 1/00

(54) **KONTAKTEINRICHTUNG, ELEKTRISCHE BAUTEILEINHEIT, VERFAHREN SOWIE VERWENDUNG EINER KONTAKTEINRICHTUNG IN EINER ELEKTRISCHEN BAUTEILEINHEIT**

(30) Priorität: 19.09.2022 DE 102022123912
(71) Anmelder: Oechsler AG, 91522 Ansbach (DE)
(72) Erfinder: Kleeberger, Friedrich, 91567 Herrieden (DE); Danner, Martin, 91792 Stopfenheim (DE); Neumann, Steffen, 91726 Gerolfingen (DE); Stanislawski, Peter, 91522 Ansbach (DE); Hurtienne, Denise, 90409 Nuernberg (DE); Soellinger, Heinz, 91522 Ansbach (DE); Murad, Ganime, 91710 Gunzenhausen (DE); Schoenrock, Edwin, 57482 Wenden (DE); Gruss, Dominic, 58313 Herdecke (DE)
(74) Vertreter: Canzler & Bergmeier Patentanwälte Partnerschaft mbB

(57) **Zusammenfassung**

Die Erfindung betrifft eine Kontakteinrichtung (4), insbesondere für einen elektromotorischen Stellantrieb, zur Herstellung einer elektrischen Verbindung zwischen einem ersten Bauteil (2) und einem zweiten Bauteil (3) mit einem ersten Steckverbinder (5), der zur Ausbildung eines Steckkontakts auf einen korrespondierenden zweiten Steckverbinder (6) des ersten Bauteils (2) aufsteckbar ist, und mit wenigstens einem ersten Anlageabschnitt (7), der zur Ausbildung eines Druckkontakts gegen einen zweiten Anlageabschnitt (8) des zweiten Bauteils (3) und/oder eines mit dem zweiten Bauteil (3) verbindbaren Zusatzelements (19) drückbar ist, wobei wenigstens ein Federabschnitt (9) zwischen dem ersten Steckverbinder (5) und dem ersten Anlageabschnitt (7) und/oder zwischen einem Befestigungsabschnitt (20) des Zusatzelements (19) und dem zweiten Anlageabschnitt (8) ausgebildet ist, der die zwei Anlageabschnitte (7, 8) mit einer Federkraft aneinander drückt, wenn die beiden Bauteile (2, 3) elektrisch miteinander verbunden sind. Erfindungsgemäß ist der erste Steckverbinder (5) als Steckhülse ausgebildet, so dass dieser auf einen als Stecker ausgebildeten zweiten Steckverbinder (6) des ersten Bauteils (2) aufsteckbar ist. Des Weiteren betrifft die Erfindung eine elektrische Bauteileinheit (1), ein Verfahren zum Herstellen und/oder Montieren einer elektrischen Bauteileinheit (1) sowie die Verwendung einer Kontakteinrichtung (4) in einer elektrischen Bauteileinheit (1).

## Beschreibung

Die vorliegende Erfindung betrifft eine Kontakteinrichtung, insbesondere für einen elektromotorischen Stellantrieb, zur Herstellung einer elektrischen Verbindung zwischen einem ersten Bauteil, insbesondere einem Motor, und einem zweiten Bauteil mit einem ersten Steckverbinder, der zur Ausbildung eines Steckkontakts auf einen korrespondierenden zweiten Steckverbinder des ersten Bauteils aufsteckbar ist, und mit wenigstens einem ersten Anlageabschnitt, der zur Ausbildung eines Druckkontakts gegen einen zweiten Anlageabschnitt des zweiten Bauteils und/oder eines mit dem zweiten Bauteil verbindbaren Zusatzelements drückbar ist, wobei wenigstens ein Federabschnitt zwischen dem ersten Steckverbinder und dem ersten Anlageabschnitt und/oder zwischen einem Befestigungsabschnitt des Zusatzelements und dem zweiten Anlageabschnitt ausgebildet ist, der die zwei Anlageabschnitte mit einer Federkraft aneinander drückt, wenn die beiden Bauteile elektrisch miteinander verbunden sind. Des Weiteren betrifft die Erfindung eine elektrische Bauteileinheit, insbesondere einen elektromotorischen Stellantrieb sowie ein Verfahren zum Herstellen und/oder Montieren einer elektrischen Bauteileinheit. Ferner betrifft die Erfindung eine Verwendung einer Kontakteinrichtung in einer elektrischen Bauteileinheit.

Kontakteinrichtungen zur Herstellung einer elektrischen Verbindung zwischen einem ersten Bauteil, insbesondere einem Motor, und einem zweiten Bauteil sind im Stand der Technik in unterschiedlichen Variationen bekannt. Häufig werden die zwei Bauteile mittels Löt- oder Schweißverbindungen, Einpressstiftverbindungen und/oder Crimpkontakt in Kombination mit einer flexiblen Litze elektrisch miteinander verbunden bzw. kontaktiert. Die Verbindung bzw. Kontaktierung als Löt- oder Schweißverbindungen und/oder Einpressstiftverbindung hat den Nachteil, dass die beiden Bauteile starr miteinander verbunden sind und dadurch kein Toleranzausgleich erfolgen kann.

Ebenfalls haben derartige Verbindungen den Nachteil, dass diese durch mechanische Belastungen und/oder Schwingungen beschädigt werden können. Verbindungen bzw. Kontaktierungen mittels Crimpkontakt in Kombination mit einer flexiblen Litze entkoppeln zwar die beiden Bauteile, wodurch ein Toleranzausgleich möglich ist, haben jedoch den Nachteil, dass diese Art der Kontaktierung hohe Einzelteilpreise und einen hohen Montageaufwand verursachen.

Auch sind Kontakteinrichtungen mit einem Federabschnitt zum Ausbilden eines Druckkontakts im Stand der Technik bekannt. So zeigt die EP 1 398 862 A2 eine Anschlussklemme für die Wicklungen eines Stators eines Elektromotors. Die Anschlussklemme umfasst einerseits einen Anschluss für Drähte der Statorwicklungen des Elektromotors und andererseits eine Blattfeder zur Ausbildung des Druckkontakts. Diese Anschlussklemme hat den Nachteil, dass eine korrespondierende Steckerbuchse am Elektromotor für den Anschluss bereitgestellt werden muss, um die Anschlussklemme am Elektromotor zu Befestigen. Somit muss der Elektromotor bzw. dessen Motorgehäuse speziell zur Verwendung dieser Anschlussklemme ausgelegt sein, wodurch dieser Elektromotor nicht oder nur bedingt für andere Anwendungsfälle geeignet ist. Auch können Kontaktprobleme des Anschlusses mit den Drähten des Stators entstehen, sollten die Drähte bei der Montage verrutschen.

Aufgabe der vorliegenden Erfindung ist es, die aus dem Stand der Technik bekannten Nachteile zu beseitigen. Aufgabe ist es insbesondere eine Kontakteinrichtung zu schaffen, welche eine zuverlässige Kontaktierung der beiden Bauteile bei gleichzeitig mechanischer Entkoppelung, einfacher Montage, hohem Toleranzausgleich und/oder geringen Kosten bereitstellt.

Die Aufgabe wird gelöst durch eine Kontakteinrichtung, eine elektrische Bauteileinheit, ein Verfahren zum Herstellen und/oder Montieren einer elektrischen Bauteileinheit und/oder einer Verwendung einer Kontakteinrichtung mit den Merkmalen der unabhängigen Patentansprüche.

Vorgeschlagen wird eine Kontakteinrichtung zur Herstellung einer elektrischen Verbindung zwischen einem ersten Bauteil und einem zweiten Bauteil. Die Kontakteinrichtung kontaktiert die zwei Bauteile elektrisch miteinander, so dass ein elektrisches Signal und/oder eine elektrische Energie von einem der Bauteile zum anderen geleitet werden kann. Die Kontakteinrichtung ist somit zumindest teilweise aus einem elektrisch leitenden Material gebildet und/oder weist wenigstens ein elektrisch leitendes Material auf. Das erste Bauteil ist vorzugsweise als Motor, insbesondere als elektrischer Stellmotor, ausgebildet. Das zweite Bauteil weist vorzugsweise wenigstens eine Leiterbahn auf, mittels welcher der Motor elektrisch verbindbar ist. Das zweite Bauteil kann dabei beispielsweise eine Leiterplatte, eine Platine und/oder ein Stanzgitter bzw. ein Kontaktblech sein, welche die wenigstens eine Leiterbahn aufweist. Die Kontakteinrichtung kontaktiert die beiden Bauteile miteinander, so dass die elektrische Bauteileinheit miteinander in elektrischer Wirkverbindung steht. Zur mechanischen Verbindung der beiden Bauteile kann die elektrische Bauteileinheit zusätzlich eine Befestigungseinrichtung aufweisen. Ist das erste Bauteil als Motor und das zweite Bauteil als Leiterplatte, Platine und/oder Stanzgitter bzw. Kontaktblech ausgebildet, so ist die elektrische Bauteileinheit als elektromotorischer Stellantrieb ausgebildet.

Die Kontakteinrichtung umfasst einen ersten Steckverbinder, der zur Ausbildung eines Steckkontakts auf einen korrespondierenden zweiten Steckverbinder des ersten Bauteils aufsteckbar ist. Des Weiteren umfasst die Kontakteinrichtung wenigstens einen ersten Anlageabschnitt, der zur Ausbildung eines Druckkontakts gegen einen zweiten Anlageabschnitt des zweiten Bauteils und/oder eines mit dem zweiten Bauteil verbindbaren Zusatzelements drückbar ist, wobei wenigstens ein Federabschnitt zwischen dem ersten Steckverbinder und dem ersten Anlageabschnitt und/oder zwischen einem Befestigungsabschnitt des Zusatzelements und dem zweiten Anlageabschnitt ausgebildet ist, der die zwei Anlageabschnitte mit einer Federkraft aneinander drückt, wenn die beiden Bauteile elektrisch miteinander verbunden sind.

Ist der erste Steckverbinder auf dem zweiten Steckverbinder aufgesteckt, so ist die Kontakteinrichtung elektrisch mit dem ersten Bauteil verbunden. Ist der zweite Anlageabschnitt am zweiten Bauteil angeordnet, so ist die Kontakteinrichtung bei Anlage mit dem zweiten Bauteil unmittelbar elektrisch verbunden. Ist der zweite Anlageabschnitt am Zusatzelement angeordnet, so ist die Kontakteinrichtung bei Anlage mit dem zweiten Bauteil mittelbar über das Zusatzelement elektrisch verbunden. Das Zusatzelement ist dabei, insbesondere mechanisch und/oder elektrisch, über den Befestigungsabschnitt mit dem zweiten Bauteil verbunden. Ist der erste Steckverbinder auf dem zweiten Steckverbinder aufgesteckt und liegt der erste Anlageabschnitt am zweiten Anlageabschnitt an, so ist das erste Bauteil mit dem zweiten Bauteil elektrisch über die Kontakteinrichtung verbunden.

Erfindungsgemäß ist der erste Steckverbinder als Steckhülse ausgebildet, so dass dieser auf einen als Stecker ausgebildeten zweiten Steckverbinder des ersten Bauteils aufsteckbar ist. Als Stecker ist der männliche und als Steckhülse der weibliche Bestandteil einer Steckverbindung zu verstehen. Als Stecker sind Kontaktstecker bzw. Kontaktzungen zu verstehen, die entlang einer Aufsteckrichtung vom ersten Bauteil abstehen. Die Länge des Steckers entlang der Aufsteckrichtung, auf die die Steckhülse aufsteckbar ist, kann auch Stecklänge genannt werden. Der Stecker und/oder die Steckhülse ist vorzugsweise als elektrisch leitfähiges Blechelement ausgebildet.

Vorzugsweise ist der Stecker als Flachstecker mit einem rechteckigen Querschnitt, als Rundstecker mit einem runden Querschnitt und/oder als quadratischer Stecker mit einem quadratischen Querschnitt ausgebildet. Die Steckhülse ist vorzugsweise korrespondierend zum Stecker als Flachsteckhülse, Rundsteckhülse oder quadratische Steckhülse ausgebildet. Als Flachstecker sind flache Kontaktstecker bzw. Kontaktzungen zu verstehen. Die Länge des Flachsteckers entlang der Aufsteckrichtung, auf die die Flachsteckhülse aufsteckbar ist, kann Stecklänge genannt werden. Die Steckbreite entlang einer Längsrichtung ist bei dem Flachstecker um ein vielfaches größer als die Steckdicke entlang einer Querrichtung. Bei dem quadratischen Stecker ist die Steckbreite entlang der Längsrichtung gleich der Steckdicke entlang der Querrichtung.

Als Steckhülse sind hülsenförmige Kontakte zu verstehen, die auf den Stecker aufsteckbar sind und so eine elektrische Verbindung gewährleisten. Steckhülsen sind vorzugsweise als elektrisch leitfähige, in hülsenform gebogene Blechelemente zu verstehen. Ist die Steckhülse auf den Stecker aufgesteckt, so wird dieser durch Formschluss, insbesondere entlang der Längsrichtung und/oder der Querrichtung, automatisch ausgerichtet und kraftschlüssig, insbesondere entlang der Aufsteckrichtung, lösbar fixiert.

Das erste Bauteil kann sehr einfach als Massenprodukt mit dem als Stecker, insbesondere als Flachstecker, ausgebildeten zweiten Steckverbinder produziert werden. Derartige erste Bauteile, insbesondere Motoren, sind aus dem Stand der Technik bereits zur Verwendung mit Crimpkontakten in Kombination mit einer flexiblen Litze bekannt und können somit ohne tiefgehenden Änderungen verwendet werden. Da die Kontakteinrichtung einen korrespondierenden, als Steckhülse, insbesondere als Flachsteckhülse, ausgebildeten zweiten Steckverbinder aufweist, kann so der Montageaufwand sehr gering gehalten werden. Aufgrund der formschlüssigen und kraftschlüssigen Verbindung des Steckers und der Steckhülse, ist zudem keine zusätzliche Buchse notwendig, was die Herstellungskosten des ersten Bauteils reduziert.

Die beiden Anlageabschnitte liegen derart aneinander an, dass ein Drucckontakt bzw. ein Anlagekontakt gebildet ist. Die beiden Anlageabschnitte können dabei im aneinander anliegenden Zustand relativ entlang der Längsrichtung und/oder Querrichtung zueinander verschoben werden. Dadurch kann mit Hilfe der zwei Anlageabschnitte der Kontakteinrichtung eine mechanische Entkopplung der beiden Bauteile entlang der Längsrichtung und/oder der Querrichtung gewährleistet werden. Trotz einer möglichen Bewegung entlang der Längsrichtung und/oder Querrichtung stehen die beiden Bauteile elektrisch miteinander in Wirkverbindung. Zudem kann aufgrund des Federabschnitts auch die mechanische Entkopplung entlang der Aufsteckrichtung gewährleistet werden, da die Feder entlang der Aufsteckrichtung die Bewegung abfedern kann.

Vorteilhaft ist es, wenn der erste Steckverbinder entlang der Aufsteckrichtung geöffnet ausgebildet ist. Dabei kann der erste Steckverbinder einseitig oder beidseitig geöffnet ausgebildet sein. Durch die wenigstens eine Öffnung kann der erste Steckverbinder auf den zweiten Steckverbinder aufgesteckt werden, wodurch die vorstehend bereits erwähnte formschlüssige Verbindung gewährleistet werden kann. Eine zusätzliche Befestigungsbuchse für die Kontakteinrichtung wird somit nicht benötigt. Ist der erste Steckverbinder beidseitig geöffnet ausgebildet, so kann der zweite Steckverbinder durch den ersten Steckverbinder hindurchragen. Dadurch ist die Länge des ersten Steckverbinders entlang der Aufsteckrichtung unabhängig von der Länge des zweiten Steckverbinders, was zu einem geringeren Planungsaufwand und/oder geringeren Montagekosten führt.

Zusätzlich oder alternativ ist es vorteilhaft, wenn der erste Steckverbinder im auf den zweiten Steckverbinder aufgesteckten Zustand entlang der Aufsteckrichtung ein freies Ende des zweiten Steckverbinders überragt. So kann gewährleistet werden, dass der zweiten Steckverbinder das zweite Bauteile auch bei Bewegung nicht berührt. Dadurch ist die mechanische Entkopplung der beiden Bauteile entlang der Aufsteckrichtung gewährleistet.

Auch ist es vorteilhaft, wenn die Federkraft entlang einer Federachse wirkt, wobei die Federachse vorzugsweise entlang der Aufsteckrichtung, einer Längsrichtung und/oder einer Querrichtung verläuft und/oder einen spitzen Winkel mit der Aufsteckrichtung, der Längsrichtung und/oder der Querrichtung bildet.

Verläuft die Federachse entlang der Aufsteckrichtung und/oder mit dem spitzen Winkel zur Aufsteckrichtung, so wirkt aufgrund des kleinen Winkels eine möglichst kleine Querkraft entlang der Längsrichtung und/oder der Querrichtung auf den ersten Steckverbinder und/oder den zweiten Steckverbinder ein. Zudem werden die beiden Bauteile beim Montieren der elektrischen Bauteileinheit vorzugsweise entlang der Aufsteckrichtung mit Hilfe der Befestigungseinrichtung zueinander befestigt. Die Befestigungseinrichtung kann beim Montieren eine entgegen der Federkraft wirkende Befestigungskraft einbringen. Durch den möglichst spitzen Winkel zwischen der Aufsteckrichtung und der Federachse wirkt somit eine entlang der Aufsteckrichtung wirkende Befestigungskraft der Federkraft entgegen.

Zusätzlich oder alternativ liegen die Anlageabschnitte normal zur Aufsteckrichtung aneinander an. Durch den möglichst spitzen Winkel zwischen der Aufsteckrichtung und der Federachse kann eine möglichst sichere und gleichmäßige Anlage der beiden Anlageabschnitte geschaffen werden.

Verläuft die Federachse entlang der Längsrichtung und/oder Querrichtung und/oder mit dem spitzen Winkel zur Längsrichtung und/oder Querrichtung, so wirkt die Federkraft quer zur Aufsteckrichtung. Dadurch ist das Einbringen einer Befestigungskraft zur Überwindung der Federkraft nicht zwingend notwendig. Vorteilhafterweise liegen dabei die Anlageabschnitte normal zur Längsrichtung und/oder Querrichtung aneinander an. Durch den möglichst spitzen Winkel zwischen der Längsrichtung und/oder der Querrichtung mit der Federachse kann eine möglichst sichere und gleichmäßige Anlage der beiden Anlageabschnitte geschaffen werden.

Des Weiteren ist es vorteilhaft, wenn die Kontakteinrichtung mehrere Federabschnitte aufweist, aus deren Einzelfederkräften und/oder Einzelfederachsen die entlang der Federachse wirkende Federkraft resultiert. Durch mehrere der Federabschnitte kann die resultierende Federkraft eingestellt werden. Zudem kann die Federkraft bzw. die Gesamtfederachse der Federkraft durch mehrere der Federabschnitte, die vorzugsweise unterschiedliche Einzelfederachsen aufweisen, verlagert und/oder eingestellt werden.

Vorteile bringt es zudem mit sich, wenn die Kontakteinrichtung einen Abstützabschnitt zum Abstützen der Kontakteinrichtung am ersten Bauteil aufweist. Durch den Abstützabschnitt kann die Federkraft am ersten Bauteil abgestützt werden, so dass diese wenigstens zum Großteil zur Ausbildung des Druckkontakts bzw. Anlage der beiden Anlageabschnitte aneinander verwendet werden kann. Zudem resultiert durch eine derartige Anordnung eine stabile Auslenkung des wenigstens einen Federabschnitts. Des Weiteren kann durch den Abstützabschnitt die Federachse verlagert und/oder eingestellt werden. Vorzugsweise ist der Abstützabschnitt an dem ersten Steckverbinder, zwischen dem ersten Steckverbinder und dem wenigstens einen Federabschnitt und/oder zwischen dem wenigstens einen Federabschnitt und dem ersten Anlageabschnitt angeordnet.

Vorteilhaft ist es zudem, wenn der wenigstens eine erste Anlageabschnitt in Aufsteckrichtung von dem ersten Steckverbinder und/oder dem Abstützabschnitt beabstandet ist.

Ebenso bringt es Vorteile mit sich, wenn die Federachse mittig zu wenigstens einem der Anlageabschnitte, zum ersten Steckverbinder und/oder zum Abstützabschnitt verläuft. Wie vorstehend bereits beschrieben, wirkt die Federkraft entlang der Federachse. Verläuft die Federachse mittig zu wenigstens einem der Anlageabschnitte, zum ersten Steckverbinder und/oder zum Abstützabschnitt, so kann gewährleistet werden, dass auf den ersten Steckverbinder und/oder den zweiten Steckverbinder keine bzw. lediglich geringe Querkräfte und/oder Momente einwirken.

Auch ist es von Vorteil, wenn der wenigstens eine Federabschnitt als wenigstens ein gebogener Federarm ausgebildet ist, an dessen Ende der wenigstens eine Anlageabschnitt angeordnet ist. Die Kontakteinrichtung ist vorzugsweise als Blechbiegeteil ausgebildet. Durch die Ausgestaltung des Federabschnitts als gebogener Federarm kann die Herstellung der Kontakteinrichtung vereinfacht werden, da dieser während des Biegevorgangs mitgebogen werden kann. Die Anordnung des wenigstens einen Anlageabschnitts am Ende des Federarms vereinfacht zudem das Einbringen der Federkraft zur Ausbildung des Druckkontakts.

Ebenso bringt es Vorteile mit sich, wenn wenigstens einer der Anlageabschnitte als Anlagefläche, Anlagebogen, Anlagewinkel, Anlagepunkt und/oder Anlageende ausgebildet ist. Ist der wenigstens eine zweite Anlageabschnitt des zweiten Bauteils als Anlagefläche ausgebildet, so ist der wenigstens eine erste Anlageabschnitt der Kontakteinrichtung vorzugsweise als wenigstens ein Anlagepunkt, Anlagebogen, Anlagewinkel und/oder Anlageende ausgebildet. Ist der wenigstens eine zweite Anlageabschnitt des Zusatzelements als wenigstens ein Anlagepunkt, Anlagebogen, Anlagewinkel und/oder Anlageende ausgebildet, so ist der wenigstens eine erste Anlageabschnitt der Kontakteinrichtung vorzugsweise als Anlagefläche ausgebildet. So kann stets gewährleistet werden, dass auch bei Toleranzen und/oder äu-ßeren mechanischen Einwirkungen die beiden Anlageabschnitte aneinander anliegen.

Vorteilhaft ist es zudem, wenn der wenigstens eine erste Anlageabschnitt, insbesondere unmittelbar, an dem wenigstens einen zweiten Anlageabschnitt des zweiten Bauteils und/oder des Zusatzelements anliegt.

Ebenso ist es vorteilhaft, wenn die Kontakteinrichtung mehrere erste Anlageabschnitte und/oder zweite Anlageabschnitte aufweist, so dass die Kontakteinrichtung mehrmals mit dem zweiten Bauteil elektrisch verbunden ist. Dadurch kann die Anlage zueinander vergrößert und somit der Widerstand verringert werden. Zudem werden aufgrund mehrerer erster Anlageabschnitte und/oder zweiter Anlageabschnitte die beiden Bauteile entlang der Aufsteckrichtung mehrfach, insbesondere an unterschiedlichen Positionen, abgestützt. Dadurch kann ein Verkippen der beiden Bauteile zueinander vermieden werden. Zudem kann durch die mehreren ersten Anlageabschnitte und/oder zweiten Anlageabschnitte die Ausfallsicherheit verbessert bzw. eine redundante Kontaktierung der beiden Bauteile mittels der Kontakteinrichtung geschaffen werden. Sollte einer der Anlageabschnitte beschädigt sein und/oder beispielsweise aufgrund eines fehlerhaften Einbaus der Kontakteinrichtung nicht anliegen, so kann ein anderer der mehreren Anlageabschnitte die Kontaktierung der beiden Bauteile gewährleisten.

Auch ist es von Vorteil, wenn die Kontakteinrichtung einteilig oder mehrteilig ausgebildet ist. Die einteilige Kontakteinrichtung besteht aus einem Kontaktelement. Die mehrteilige Kontakteinrichtung umfasst zusätzlich zum Kontaktelement das Zusatzelement und/oder einen als separate Druckfeder ausgebildeten Federabschnitt. Als einteilige Kontakteinrichtung ist dabei ebenfalls eine aus mehreren fest miteinander verbundenen Bestandteilen bestehende Kontakteinrichtung zu verstehen.

Vorteile bringt es mit sich, wenn das Kontaktelement der mehrteiligen Kontakteinrichtung den ersten Steckverbinder und den wenigstens einen ersten Anlageabschnitt und/oder das Zusatzelement den wenigstens einen Federabschnitt und den wenigstens einen zweiten Anlageabschnitt aufweist, wobei das Kontaktelement und das Zusatzelement zum elektrischen Verbinden der zwei Bauteile über den wenigstens einen ersten Anlageabschnitt des Kontaktelements und den wenigstens einen zweiten Anlageabschnitt des Zusatzelements aneinander anliegen. Der Federabschnitt verbindet dabei vorzugsweise den zweiten Anlageabschnitt mit einem Befestigungsabschnitt, mittels welchem das Zusatzelement am zweiten Bauteil befestigt ist. Das Zusatzbauteil und das Kontaktelement der mehrteiligen Kontakteinrichtung können einfacher herstellbar sein als die einteilige Kontakteinrichtung. Zudem kann bei einem großen Abstand der beiden Bauteile entlang der Aufsteckrichtung durch die mehrteilige Kontakteinrichtung eine stabilere Kontaktierung gewährleistet werden. Des Weiteren können das Zusatzelement und das Kontaktelement unabhängig voneinander auf das jeweilige Bauteil montiert werden, wodurch der Montageaufwand beim finalen Zusammenbau der elektrischen Bauteileinheit reduziert wird.

Auch ist es vorteilhaft, wenn der zweite Anlageabschnitt bei der einteiligen Kontakteinrichtung am zweiten Bauteil und/oder bei der mehrteiligen Kontakteinrichtung am Zusatzelement angeordnet ist.

Vorteile bringt es zudem mit sich, wenn das Zusatzelement, insbesondere verschiebefest, mittels dem Befestigungsabschnitt am zweiten Bauteil befestigt ist. Der Befestigungsabschnitt kann dabei das Zusatzelement mechanisch befestigen und/oder elektrisch mit dem zweiten Bauteil verbinden. Beispielsweise kann der Befestigungsabschnitt wenigstens einen Lötstift, einen Clip, einen Stift und/oder weiteren Steckverbinder umfassen.

Ebenso ist es vorteilhaft, wenn die Kontakteinrichtung einen Ausgleichsabschnitt aufweist, der einen entlang einer Längsrichtung und/oder Querrichtung der Kontakteinrichtung gebildeten Versatz des zweiten Steckverbinders zu dem zweiten Anlageabschnitt ausgleicht und/oder überbrückt. Der zweite Steckverbinder des ersten Bauteils und der zweite Anlageabschnitt des zweiten Bauteils und/oder des Zusatzelements können Konstruktionsbedingt in Längsrichtung und/oder Querrichtung voneinander beabstandet sein. Dies kann als Versatz bezeichnet werden. Um diesen Versatz vereinfacht ausgleichen zu können, weist die Kontakteinrichtung den Ausgleichsabschnitt auf.

Des Weiteren ist es vorteilhaft, wenn der Ausgleichsabschnitt an dem Kontaktelement der mehrteiligen und/oder der einteiligen Kontakteinrichtung angeordnet ist.

Ebenso bringt es Vorteile mit sich, wenn der Ausgleichsabschnitt den ersten Steckverbinder mit dem Abstützabschnitt, dem Federabschnitt und/oder dem ersten Anlageabschnitt verbindet, wobei der Ausgleichsabschnitt vorzugsweise als Ausgleichsschlaufe ausgebildet ist. Häufig grenzt der Ausgleichabschnitt unmittelbar am ersten Steckverbinder an. Der Ausgleichabschnitt als Ausgleichsschlaufe kann dabei zusätzlich zum Ausgleichen in Längsrichtung und/oder Querrichtung einen Toleranzausgleich entlang der Aufsteckrichtung schaffen. Auch ist mit Hilfe der Ausgleichsschlaufe das Ausgleichen entlang der Längsrichtung und/oder Querrichtung vereinfacht, da hierfür die Schlaufe aufgeweitet werden kann. Angrenzend an den Ausgleichsabschnitt ist vorzugsweise der Abstützabschnitt angeordnet, der die Kontakteinrichtung, insbesondere das Kontaktelement, am ersten Bauteil abstützt. So kann der am Abstützabschnitt angrenzende Federabschnitt mit der Federkraft entlang der Aufsteckeinrichtung auf den an den Federabschnitt angrenzenden ersten Anlageabschnitt einwirken.

Vorteile bringt es mit sich, wenn der wenigstens eine Federabschnitt als Blattfeder und/oder Druckfeder ausgebildet ist.

Ebenso bringt es Vorteile mit sich, wenn der als Blattfeder ausgebildete Federabschnitt mit dem ersten Steckverbinder, dem ersten Anlageabschnitt, dem zweiten Anlageabschnitt, dem Abstützabschnitt und/oder dem Befestigungsabschnitt eine zusammenhängende Einheit ausbildet. Dies führt zu einer sehr einfachen Ausgestaltung der Kontakteinrichtung, insbesondere als Blechbiegeteil.

Zusätzlich oder alternativ wirkt der als Druckfeder ausgebildete Federabschnitt auf einen der Anlageabschnitte, den ersten Steckverbinder und/oder den Abstützabschnitt ein. Die Druckfeder ist dabei vorzugsweise als separate Druckfeder der mehrteiligen Kontakteinrichtung ausgebildet. Die separate Druckfeder hat den Vorteil, dass diese als Normteil bzw. Standardteil zugekauft werden kann und so die Fertigungskosten des Kontaktelements, insbesondere ohne Federabschnitt, reduziert.

Ferner wird eine elektrische Bauteileinheit, insbesondere ein elektromotorischer Stellantrieb vorgeschlagen. Die elektrische Bauteileinheit umfasst ein erstes Bauteil, insbesondere einen Motor, das wenigstens einen zweiten Steckverbinder aufweist, ein zweites Bauteil, das wenigstens einen zweiten Anlageabschnitt aufweist und/oder das mit einem Zusatzelement, das den zweiten Anlageabschnitt aufweist, verbindbar ist, und eine Kontakteinrichtung zur Herstellung einer elektrischen Verbindung zwischen dem ersten Bauteil und dem zweiten Bauteil. Das zweite Bauteil kann beispielsweise, wie vorstehend bereits ausgeführt, als Leiterplatte, Platine und/oder Stanzblech ausgebildet sein und wenigstens eine Leiterbahn aufweisen.

Erfindungsgemäß ist die Kontakteinrichtung gemäß der vorangegangenen Beschreibung ausgebildet, wobei die genannten Merkmale einzeln oder in beliebiger Kombination vorhanden sein können.

Vorteilhaft ist es, wenn der erste Steckverbinder als ein in Aufsteckrichtung vom ersten Bauteil abstehender Stecker, insbesondere Flachstecker, und/oder der an dem zweiten Bauteil angeordnete zweite Anlageabschnitt als Anlagefläche ausgebildet ist.

Zudem ist es vorteilhaft, wenn wenigstens eine Befestigungseinrichtung das erste Bauteil und das zweite Bauteil in Aufsteckrichtung zueinander verschiebefest befestigt. Als Befestigungseinrichtung ist hierbei eine Einrichtung zu verstehen, die die beiden Bauteile zueinander befestigt. Die Befestigungseinrichtung kann beispielsweise ein Gehäuse mit wenigstens einem Gehäuseabschnitt umfassen, mittels dem die beiden Bauteile zueinander befestigt bzw. fixiert sind. Vorzugsweise umfasst das Gehäuse zwei Gehäuseabschnitte, wobei in jedem der Gehäuseabschnitte eines der Bauteile lagerbar bzw. aufnehmbar ist. Zusätzlich oder alternativ kann wenigstens eines der Bauteile wenigstens einen Gehäuseabschnitt umfassen. Die Gehäuseabschnitte können vorzugsweise entlang der Aufsteckrichtung aneinander angelegt und/oder miteinander verbunden werden. Die Gehäuseteile können dabei miteinander verschweißt, verschraubt und/oder verclipst werden, so dass dadurch ein Gehäuse der elektrischen Bauteileinheit, insbesondere des elektromotorischen Stellantriebs gebildet ist. Die beiden Bauteile sind somit mittels des Gehäuses entlang der Aufsteckrichtung zueinander verschiebefest befestigt.

Da es sich bei dem ersten Bauteil vorzugsweise um einen Motor handelt, kann eine geringe Relativbewegung des ersten Bauteils bei Belastung notwendig sein. So kann der Motor bei Belastung eine Drehbewegung, eine Kippbewegung und/oder eine Translation entlang der Querrichtung und/oder Längsrichtung ausführen. Die Befestigungseinrichtung, insbesondere als Gehäuse, kann diese Relativbewegungen beispielsweise mittels elastischer Elemente ausgleichen.

Die beiden Bauteile werden bei der Montage vorzugsweise entlang der Aufsteckrichtung zueinander hin gedrückt und mittels der Befestigungseinrichtung zueinander verschiebefest befestigt. Dabei wird zwischen den beiden Anlageflächen ein Druckkontakt ausgebildet, wobei die Federkraft der Befestigungskraft, welche durch die Befestigungseinrichtung eingebracht wird, entgegenwirkt.

Des Weiteren wird ein Verfahren zum Herstellen und/oder Montieren einer elektrischen Bauteileinheit, insbesondere eines elektromotorischen Stellantriebs, vorgeschlagen. Das erfindungsgemäße Verfahren umfasst folgende Schritte. Aufstecken eines ersten Steckverbinders einer gemäß der vorangegangenen Beschreibung ausgebildeten Kontakteinrichtung auf einen korrespondierenden zweiten Steckverbinder eines ersten Bauteils, insbesondere eines Motors. Ausbilden eines Druckkontakts zwischen einem ersten Anlageabschnitt der Kontakteinrichtung und einem zweiten Anlageabschnitt des zweiten Bauteils und/oder eines mit dem zweiten Bauteil verbindbaren Zusatzelements, so dass die zwei Bauteile mittels des Druckkontakts elektrisch miteinander verbunden sind.

Die Kontakteinrichtung ist gemäß der vorangegangenen Beschreibung ausgebildet, wobei die genannten Merkmale einzeln oder in beliebiger Kombination vorhanden sein können.

Vorteilhaft ist es, dass während dem Ausbilden des Druckkontakts die beiden Bauteile mit Hilfe der Befestigungseinrichtung zueinander befestigt werden. Beim Befestigen werden die beiden Bauteile, wie vorstehend bereits beschrieben, vorzugsweise in jeweils einem Gehäuseabschnitt angeordnet und die beiden Gehäuseabschnitte zu dem Gehäuse verbunden.

Zudem wird eine Verwendung einer Kontakteinrichtung in einer elektrischen Bauteileinheit, insbesondere in einem elektromotorischen Stellantrieb, zum Herstellen einer elektrischen Verbindung zwischen einem ersten Bauteil, insbesondere einem Motor, und einem zweiten Bauteil vorgeschlagen. Das zweite Bauteil kann beispielsweise, wie vorstehend bereits ausgeführt, als Leiterplatte, Platine und/oder Stanzblech ausgebildet sein und wenigstens eine Leiterbahn aufweisen. Erfindungsgemäß ist die Kontakteinrichtung gemäß der vorangegangenen Beschreibung ausgebildet, wobei die genannten Merkmale einzeln oder in beliebiger Kombination vorhanden sein können.

Weitere Vorteile der Erfindung sind in den nachfolgenden Ausführungsbeispielen beschrieben. Es zeigen:
- **Figur 1**: eine schematische Vorderansicht einer elektrischen Bauteileinheit in einem getrennten Zustand gemäß einem Ausführungsbeispiel,
- **Figur 2**: eine schematische Vorderansicht einer elektrischen Bauteileinheit ähnlich dem Ausführungsbeispiel der Figur 2 in einem zusammengebauten Zustand,
- **Figur 3**: eine schematische geschnittene Seitenansicht einer elektrischen Bauteileinheit in einem zusammengebauten Zustand gemäß einem alternativen Ausführungsbeispiel,
- **Figur 4**: eine schematische geschnittene Seitenansicht einer elektrischen Bauteileinheit in einem zusammengebauten Zustand gemäß einem weiteren Ausführungsbeispiel,
- **Figur 5**: eine schematische geschnittene Seitenansicht einer elektrischen Bauteileinheit in einem zusammengebauten Zustand gemäß einem weiteren alternativen Ausführungsbeispiel und
- **Figur 6**: eine schematische geschnittene Seitenansicht einer elektrischen Bauteileinheit in einem zusammengebauten Zustand gemäß einem weiteren alternativen Ausführungsbeispiel.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

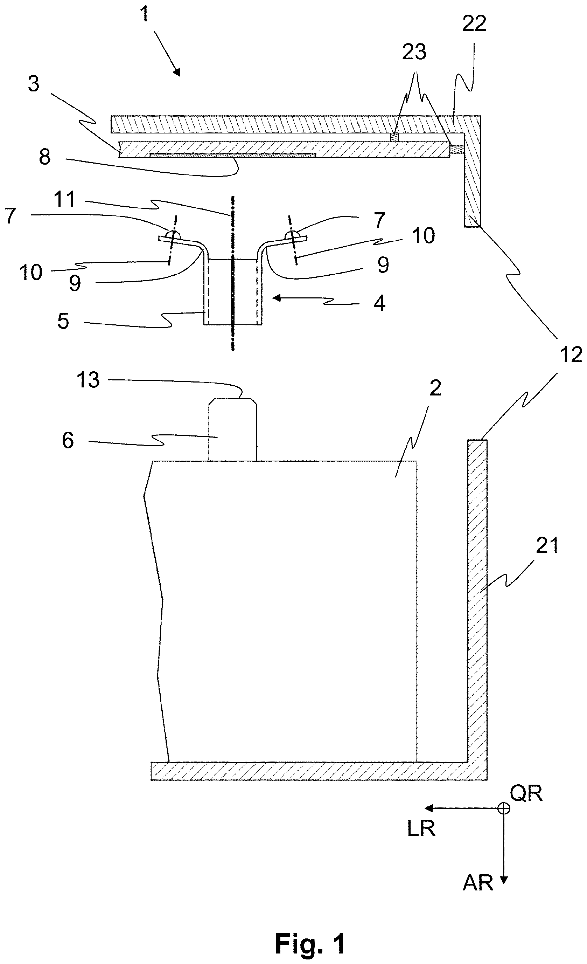

Figur 1 zeigt eine schematische Vorderansicht einer elektrischen Bauteileinheit 1 in einem getrennten Zustand gemäß einem Ausführungsbeispiel. Die elektrische Bauteileinheit 1 umfasst ein erstes Bauteil 2, ein zweites Bauteil 3 und eine Kontakteinrichtung 4. Das erste Bauteil 2, das zweite Bauteil 3 und die Kontakteinrichtung 4 sind in dem getrennten Zustand voneinander beabstandet angeordnet. Das zweite Bauteil 3 ist geschnitten dargestellt. Zudem ist für eine vereinfachte Darstellung lediglich ein Ausschnitt des ersten Bauteils 2 und des zweiten Bauteils 3 dargestellt. Ferner ist das erste Bauteil 2, welches beispielsweise als Motor ausgebildet ist, ohne eine Abtriebswelle abgebildet. Die nicht dargestellte Abtriebswelle kann beispielsweise durch eine Aussparung des zweiten Bauteils 3 ragen. Das zweite Bauteil 3, welches beispielsweise eine Leiterplatte bzw. eine Platine und/oder ein Stanzgitter bzw. ein Kontaktblech ist, ist zur vereinfachten Darstellung ohne Leiterbahn abgebildet.

Die Kontakteinrichtung 4 weist einen ersten Steckverbinder 5 auf, der zur Ausbildung eines Steckkontakts auf einen korrespondierenden zweiten Steckverbinder 6 des ersten Bauteils 2 aufsteckbar ist. Der erste Steckverbinder 5 ist erfindungsgemäß als Flachsteckhülse ausgebildet, die in einer Aufsteckrichtung AR auf den als Flachstecker ausgebildeten zweiten Steckverbinder 6 des ersten Bauteils 2 aufsteckbar ist. Die Kontakteinrichtung 4 ist im gezeigten Ausführungsbeispiel einteilig ausgebildet. Die Kontakteinrichtung 4 ist vorzugsweise als Blechbiegeteil ausgebildet, wobei ein derartiges Blechbiegeteil beispielsweise in einem Stanz-Biege-Prozess hergestellt werden kann. Um die Flachsteckhülse auf den Flachstecker aufsteckten zu können ist die Flachsteckhülse in Aufsteckrichtung AR zumindest einseitig geöffnet ausgebildet. Im gezeigten Ausführungsbeispiel ist die Flachsteckhülse beidseitig geöffnet ausgebildet. Die Flachstecker bzw. Flachsteckhülse werden als "flach" bezeichnet, da die Steckbreite entlang einer Längsrichtung LR um ein vielfaches größer als die Steckdicke entlang einer Querrichtung QR ist. Alternativ ist es vorstellbar, dass der erste Steckverbinder 5 als Rundstecker und/oder quadratischer Stecker bzw. der zweite Steckverbinder 6 als Rundsteckhülse und/oder quadratische Steckhülse ausgebildet ist.

Die Kontakteinrichtung 4 ist dazu ausgebildet, elektrischen Strom und/oder elektrische Signale zwischen den beiden Bauteilen 2, 3 der elektrischen Bauteileinheit 1 zu leiten. Hierfür weist die elektrische Bauteileinheit 1 vorzugsweise wenigstens zwei Kontakteinrichtungen 4 auf. So kann mit Hilfe des als Leiterplatte ausgebildeten zweiten Bauteils 3 ein Stromkreis geschlossen werden bzw. das als Motor ausgebildete erste Bauteil 2 mit elektrischer Energie versorgt werden.

Zur Ausbildung eines Druckkontakts ist im dargestellten Ausführungsbeispiel wenigstens ein erster Anlageabschnitt 7 der Kontakteinrichtung 4 gegen einen zweiten Anlageabschnitt 8 des zweiten Bauteils 3 drückbar. Im gezeigten Ausführungsbeispiel weist die Kontakteinrichtung 4 zwei erste Anlageabschnitte 7 auf, welche als konvexe Anlagepunkte bzw. Kontaktpunkte ausgebildet sind. Der zweite Anlageabschnitt 8 ist als Anlagefläche am zweiten Bauteil 3 angeordnet. Da die elektrische Bauteileinheit 1 im gezeigten Ausführungsbeispiel in dem getrennten Zustand dargestellt ist, liegen die ersten Anlageabschnitte 7 nicht am zweiten Anlageabschnitt 8 an, weshalb kein Druckkontakt gebildet ist.

Zwischen dem ersten Steckverbinder 5 und dem ersten Anlageabschnitt ist wenigstens ein Federabschnitt 9 angeordnet. Im gezeigten Ausführungsbeispiel verbindet jeweils ein Federabschnitt 9 einen der beiden ersten Anlageabschnitte 7 mit dem ersten Steckverbinder 5. Die Federabschnitte 9 sind dabei als Federarme ausgebildet. Jeder der Federabschnitte 9 weist eine Einzelfederachse 10 auf, entlang welcher bei Anlage des wenigstens einen ersten Anlageabschnitts 7 am wenigstens einen zweiten Anlageabschnitt 8 eine Einzelfederkraft der Federabschnitte 9 wirkt, so dass der jeweilige erste Anlageabschnitt 7 und der zweite Anlageabschnitt 8 aneinandergedrückt werden. Aus den mehreren Einzelfederachsen 10 resultiert eine Federachse 11, entlang welcher die aus den Einzelfederkräften resultierende Federkraft wirkt, wenn die Anlageabschnitte 7, 8 aneinandergedrückt werden.

Um das erste Bauteil 2 mit dem zweiten Bauteil 3 mechanisch zu verbinden, weist das Ausführungsbeispiel der Figur 1 eine Befestigungseinrichtung 12 auf. Die Befestigungseinrichtung 12 umfasst beispielsweise zwei Gehäuseabschnitte 21, 22, wobei das erste Bauteil 2 an einem ersten Gehäuseabschnitt 21 und das zweite Bauteil 3 an einem zweiten Gehäuseabschnitt 22 angeordnet ist. Im gezeigten Ausführungsbeispiel ist mittels wenigstens einem Befestigungselement 23 das zweite Bauteile 3 entlang der Aufsteckrichtung AR, der Längsrichtung LR und/oder der Querrichtung QR verschiebefest am zweiten Gehäuseabschnitt 22 angeordnet. Das erste Bauteil 2 ist vorzugsweise entlang der Aufsteckrichtung AR verschiebefest an dem ersten Gehäuseabschnitt 21 angeordnet. Ist das erste Bauteil 2 vorzugsweise als Motor ausgebildet, so kann dieser bei Belastung entlang der Längsrichtung LR und/oder der Querrichtung QR zumindest geringfügig bewegt werden. Um das Verkippen, Bewegen und/oder Drehen des ersten Bauteils 2, insbesondere des Motors bei Belastung, innerhalb des ersten Gehäuseabschnitts 21 zu begrenzen, kann die Befestigungseinrichtung 12 zusätzliche, hier im gezeigten Ausführungsbeispiel nicht dargestellte, elastische Elemente umfassen.

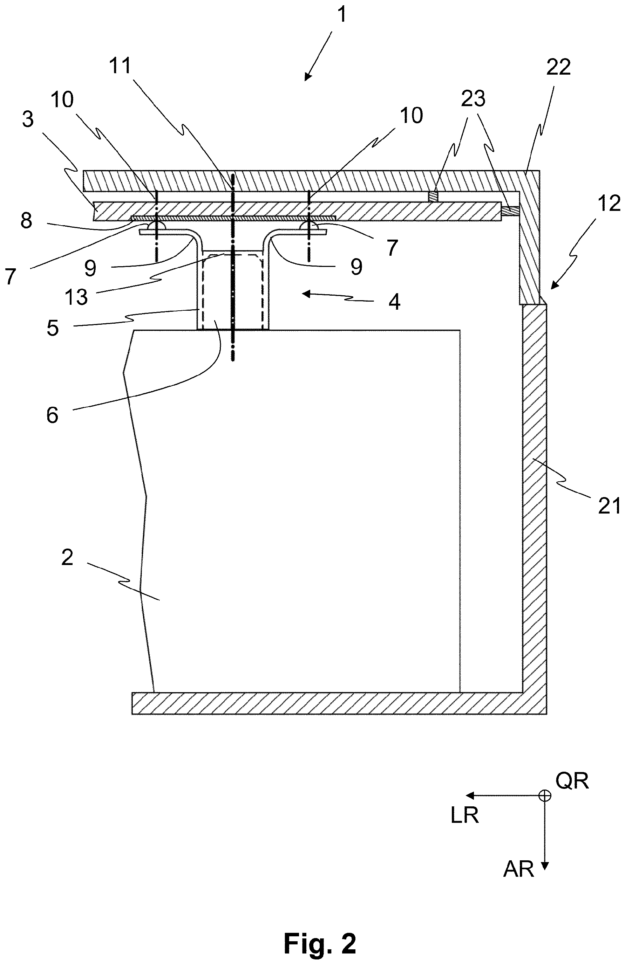

Um die elektrische Bauteileinheit 1 zusammenzubauen, wird zunächst der erste Steckverbinder 5 der Kontakteinrichtung 4 auf den korrespondierenden zweiten Steckverbinder 6 des ersten Bauteils 2 aufgesteckt. Daran anschließend kann zwischen dem wenigstens einen ersten Anlageabschnitt 7 der Kontakteinrichtung 4 und dem wenigstens zweiten Anlageabschnitt 8 des zweiten Bauteils 3 der Druckkontakt ausgebildet werden, indem die Anlageabschnitte 7, 8 aneinandergedrückt werden. Die beiden Bauteile 2, 3 sind jeweils an und/oder in einem der Gehäuseabschnitte 21, 22 angeordnet und werden bei der Montage zueinander hinbewegt und/oder befestigt, wobei dadurch der Druckkontakt gebildet und/oder aufrechterhalten werden kann. Der daraus resultierende zusammengebaute Zustand ist in der Figur 2 dargestellt.

Figur 2 zeigt die elektrische Bauteileinheit 1 ähnlich dem Ausführungsbeispiel der Figur 1 in dem zusammengebauten Zustand. Wie vorstehend bereits beschrieben, ist im zusammengebauten Zustand der elektrischen Bauteileinheit 1 der erste Steckverbinder 5 der Kontakteinrichtung 4 auf den zweiten Steckverbinder 6 des ersten Bauteils 2 aufgesteckt. Der erste Steckverbinder 5 der Kontakteinrichtung 4 überragt entlang der Aufsteckrichtung AR ein freies Ende 13 des zweiten Steckverbinders 6.

Die ersten Anlageabschnitte 7 liegen am zweiten Anlageabschnitt 8 an und bilden so einen Druckkontakt aus. Hierfür drücken die Federabschnitte 9 den ersten Anlageabschnitt 7 gegen den zweiten Anlageabschnitt 8. Die Einzelfederkräfte, welche von den als Federarmen ausgebildeten Federabschnitten 9 resultieren, wirken entlang der Einzelfederachsen 10. Aufgrund des Andrückens der Anlageabschnitte 7, 8 aneinander haben sich die Federabschnitte 9, insbesondere elastisch, verformt, wodurch sich die Einzelfederachsen 10 verschoben und/oder gedreht haben. Die Position und/oder Ausrichtung der resultierenden Federachse 11 ist im Vergleich zum Ausführungsbeispiel der Figur 1 gleichgeblieben.

Die Federachse 11 verläuft entlang der Aufsteckrichtung AR. Zudem verläuft die Federachse 11 mittig zum ersten Steckverbinder 5 und/oder zum zweiten Steckverbinder 6. Des Weiteren verläuft die Federachse 11 im gezeigten Ausführungsbeispiel mittig zwischen den beiden ersten Anlageabschnitten 7 und/oder den beiden Federabschnitten 9. Dadurch wirkt die entlang der Federachse 11 verlaufende Federkraft derart entlang der Aufsteckrichtung AR, dass diese die beiden Bauteile 2, 3 voneinander wegdrückt. Die Befestigungseinrichtung 12, welche im gezeigten Ausführungsbeispiel aus den beiden miteinander verbundenen Gehäuseabschnitten 21, 22 gebildet ist, wirkt der Federkraft entgegen, wodurch der Druckkontakt aufrechterhalten werden kann. Die beiden Gehäuseabschnitte 21, 22 können dabei, wie dargestellt, beispielsweise miteinander verschweißt werden und so ein Gehäuse der elektrischen Bauteileinheit 1 ausbilden.

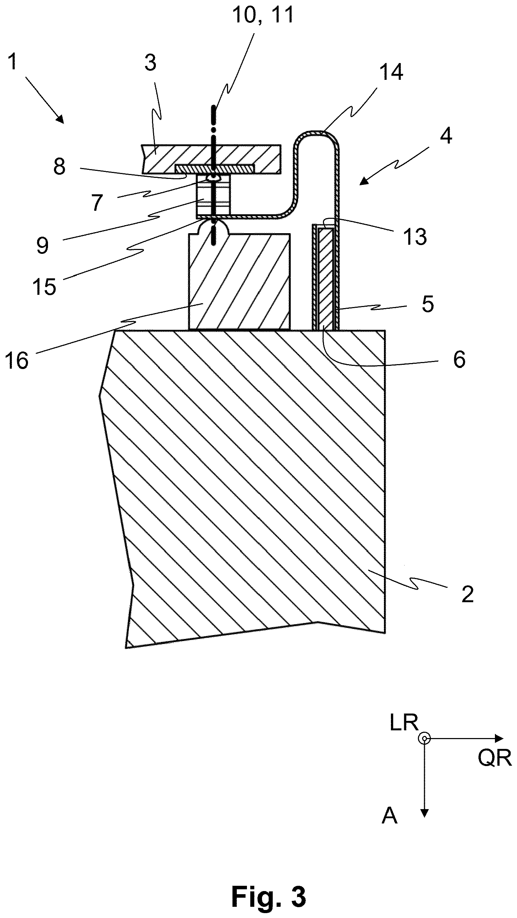

Figur 3 zeigt eine schematische geschnittene Seitenansicht einer elektrischen Bauteileinheit 1 in einem zusammengebauten Zustand gemäß einem alternativen Ausführungsbeispiel. Ähnlich zum Ausführungsbeispiel der Figur 1 und 2 ist auch hier lediglich ein Ausschnitt des ersten Bauteils 2 und des zweiten Bauteils 3 dargestellt. Auch ist lediglich eine der Kontakteinrichtungen 4 dargestellt, wobei die elektrische Bauteileinheit 1 auch in diesem Ausführungsbeispiel mehrere, insbesondere zwei, Kontakteinrichtungen 4 aufweisen kann. Auch auf die Darstellung der Befestigungseinrichtung 12 wurde verzichtet, wobei diese ähnlich zum Ausführungsbeispiel der Figuren 1 und 2 ausgebildet sein kann.

Die Kontakteinrichtung 4 weist auch hier den wenigstens einen Federabschnitt 9 auf. Die Kontakteinrichtung 4 ist im gezeigten Ausführungsbeispiel mittig normal zur Längsrichtung LR geschnitten dargestellt, weshalb lediglich der eine Federabschnitt 9 dargestellt ist. Die Kontakteinrichtung 4 ist vorzugsweise zur hier gewählten Schnittebene symmetrisch ausgebildet, weshalb die Kontakteinrichtung 4 auch in diesem Ausführungsbeispiel zwei als Federarme ausgebildete Federabschnitte 9 aufweist. Am Ende jedes Federabschnitts 9 ist der erste Anlageabschnitt 7 ausgebildet, der mit dem zweiten Anlageabschnitt 8 des zweiten Bauteils 3 die Druckverbindung ausbildet.

Im Unterschied zu den vorhergehenden Ausführungsbeispielen sind der zweite Steckverbinder 6 des ersten Bauteils 2 und der zweite Anlageabschnitt 8 des zweiten Bauteils 3 zusätzlich zur Aufsteckrichtung AR auch entlang der Querrichtung QR voneinander beabstandet. Dieser Abstand kann auch Versatz genannt werden. Um den Abstand zu überbrücken, weist die Kontakteinrichtung 4 einen Ausgleichsabschnitt 14 auf. Der Ausgleichsabschnitt 14 ist im dargestellten Ausführungsbeispiel als Ausgleichsschlaufe ausgebildet.

Des Weiteren umfasst die Kontakteinrichtung 4 im gezeigten Ausführungsbeispiel einen Abstützabschnitt 15. Mithilfe des Abstützabschnitts 15 kann die Kontakteinrichtung 4 derart am ersten Bauteil 2 abgestützt werden, dass die Einzelfederachsen 10 und/oder die Federachse 11 entlang der Aufsteckrichtung AR wirkt. Mit Hilfe des Abstützabschnitts 15 kann der Verlauf der Einzelfederachsen 10 und/oder der Federachse 11 verändert bzw. angepasst werden. Hierfür kann an dem ersten Bauteil 2 ein korrespondierendes Abstützelement 16 angeordnet sein, an dem der Abstützabschnitt 15 bei ausgebildetem Druckkontakt bzw. im zusammengebauten Zustand anliegt. Im gezeigten Ausführungsbeispiel verläuft die Federachse 11 aufgrund der Anlage des Abstützabschnitts 15 zwischen dem Abstützelement 16 des ersten Bauteils 2 und dem zweiten Anlageabschnitt 8 des zweiten Bauteils 3.

Hierbei ist es ebenfalls vorstellbar, dass der Abstützabschnitt 15 unmittelbar am ersten Bauteil 2 anliegt und dadurch abgestützt wird. Zusätzlich oder alternativ ist es vorstellbar, dass das erste Bauteil 2 entsprechend der Form des Abstützelements 16 geformt ist. Auch ist es vorstellbar, dass der Ausgleichabschnitt 14 zusätzlich oder alternativ einen Versatz entlang der Längsrichtung LR ausgleicht.

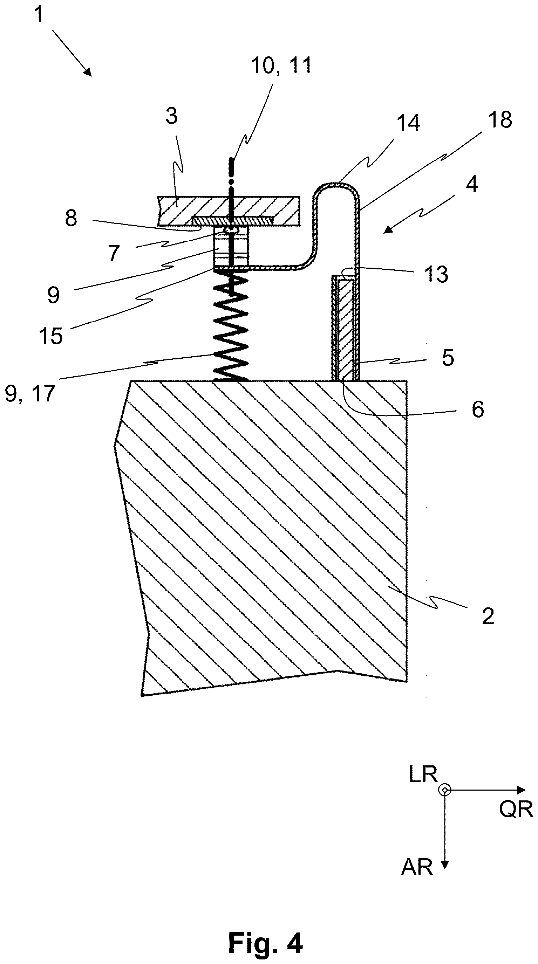

Figur 4 zeigt eine schematische geschnittene Seitenansicht einer elektrischen Bauteileinheit 1 in einem zusammengebauten Zustand gemäß einem weiteren Ausführungsbeispiel. Ähnlich zum Ausführungsbeispiel der Figur 1 - 3 ist auch hier lediglich ein Ausschnitt des ersten Bauteils 2 und des zweiten Bauteils 3 dargestellt. Auch ist lediglich eine Kontakteinrichtung 4 dargestellt, wobei die elektrische Bauteileinheit 1 auch in diesem Ausführungsbeispiel mehrere, insbesondere zwei, Kontakteinrichtungen 4 aufweisen kann. Auch auf die Darstellung der Befestigungseinrichtung 12 wurde verzichtet, wobei diese ähnlich zum Ausführungsbeispiel der Figuren 1 und 2 ausgebildet sein kann.

Im Gegensatz zu den vorangegangenen Ausführungsbeispielen weist die Kontakteinrichtung 4 einen, als separate Druckfeder 17 ausgebildeten, Federabschnitt 9 auf. Die Kontakteinrichtung 4 ist somit im gezeigten Ausführungsbeispiel als mehrteilige Kontakteinrichtung 4 ausgebildet, wobei diese die Druckfeder 17 und ein Kontaktelement 18 umfasst. Die Druckfeder 17 liegt dabei am Abstützabschnitt 15 des Kontaktelements 18 an und bewirkt eine entlang der Federachse 11 wirkende Federkraft. Das Kontaktelement 18 weist im gezeigten Ausführungsbeispiel den ersten Steckverbinder 5, den Ausgleichabschnitt 14, den Abstützabschnitt 15, den wenigstens einen Federabschnitt 9 und den wenigstens einen ersten Anlageabschnitt 7 auf. Alternativ ist es vorstellbar, dass das Kontaktelement 18 keinen Federabschnitt 9 umfasst und die Kontakteinrichtung 4 mittels des als separate Druckfeder 17 ausgebildeten Federabschnitts 9 den Druckkontakt ausbildet.

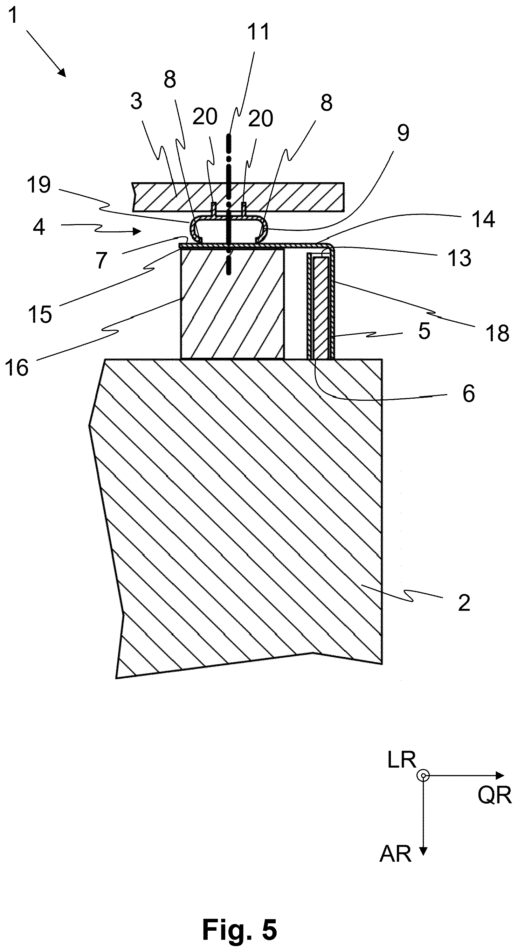

Figur 5 zeigt eine schematische geschnittene Seitenansicht einer elektrischen Bauteileinheit 1 in einem zusammengebauten Zustand gemäß einem weiteren alternativen Ausführungsbeispiel. Ähnlich zum Ausführungsbeispiel der Figur 1 - 4 ist auch hier lediglich ein Ausschnitt des ersten Bauteils 2 und des zweiten Bauteils 3 dargestellt. Auch ist lediglich eine Kontakteinrichtung 4 dargestellt, wobei die elektrische Bauteileinheit 1 auch in diesem Ausführungsbeispiel mehrere, insbesondere zwei, Kontakteinrichtungen 4 aufweisen kann. Auch auf die Darstellung der Befestigungseinrichtung 12 wurde verzichtet, wobei diese ähnlich zum Ausführungsbeispiel der Figuren 1 und 2 ausgebildet sein kann.

Im Gegensatz zu den vorherigen Ausführungsbeispielen ist die Kontakteinrichtung 4 als mehrteilige Kontakteinrichtung 4 mit dem Kontaktelement 18 und einem Zusatzelement 19 ausgebildet. Das Kontaktelement 18 umfasst dabei den ersten Steckverbinder 5 und den wenigstens einen ersten Anlageabschnitt 7. Der erste Anlageabschnitt 7 ist hierbei als Anlagefläche ausgebildet. Das Zusatzelement 19 umfasst den wenigstens einen Federabschnitt 9 und den wenigstens einen zweiten Anlageabschnitt 8. Der wenigstens eine zweite Anlageabschnitt 8 ist als Anlageende bzw. Anlageboden ausgebildet.

Zudem ist im Gegensatz zu den vorherigen Ausführungsbeispielen der wenigstens eine Federabschnitt 9 am Zusatzelement 19 angeordnet. Zum elektrischen Verbinden werden der wenigstens eine erste Anlageabschnitt 7 des Kontaktelements 18 an den wenigstens einen zweiten Anlageabschnitt 8 des Zusatzelements 19 angelegt, wodurch der Druckkontakt gebildet wird.

Mit Hilfe eines Befestigungsabschnitts 20 wird das Zusatzelement 19 am zweiten Bauteil 3 befestigt. Zudem kann das Zusatzelement 19 mittels des Befestigungsabschnitts 20 mit dem zweiten Bauteil 3 elektrisch verbunden werden. Ist das zweite Bauteil 3 die Leiterplatte, so kann der Befestigungsabschnitt 20 mit den Leiterbahnen des als Leiterplatte ausgebildeten zweiten Bauteils 3 elektrisch in Wirkverbindung stehen, so dass der geschlossene Stromkreis gebildet wird.

Wie im Ausführungsbeispiel der Figur 5 dargestellt, kann auch das Kontaktelement 18 der mehrteiligen Kontakteinrichtung 4 den Ausgleichabschnitt 14 umfassen. Dieser Ausgleichabschnitt 14 kann aufgrund des als Anlagefläche ausgebildeten ersten Anlageabschnitts 7 als einfache Verlängerung dieser Anlagefläche ausgebildet sein. So kann der zweite Anlageabschnitt 8 des Zusatzelements 19 über die gesamte Länge des als Anlagefläche ausgebildeten ersten Anlageabschnitts 7 anliegen und so den Druckkontakt ausbilden.

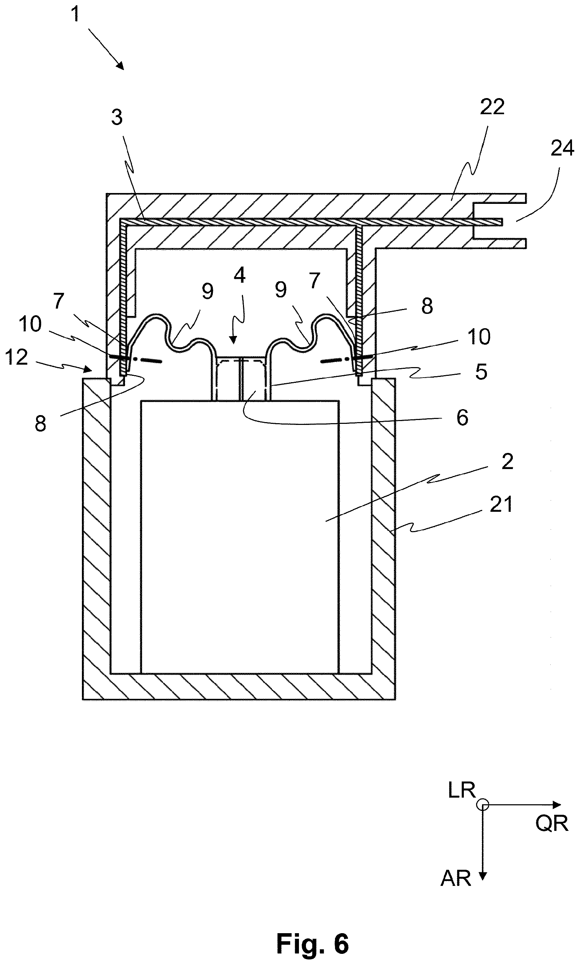

Figur 6 zeigt eine schematische geschnittene Seitenansicht einer elektrischen Bauteileinheit 1 in einem zusammengebauten Zustand gemäß einem weiteren alternativen Ausführungsbeispiel. Es ist lediglich eine Kontakteinrichtung 4 dargestellt, wobei die elektrische Bauteileinheit 1 auch in diesem Ausführungsbeispiel mehrere, insbesondere zwei, Kontakteinrichtungen 4 aufweisen kann.

Die Kontakteinrichtung 4 weist zwei Federabschnitte 9 auf, welche jeweils mit der entlang der Einzelfederachse 10 wirkenden Einzelfederkraft die jeweiligen Anlageabschnitte 7, 8 aneinanderdrückt. Im Gegensatz zu den vorherigen Ausführungsbeispielen bilden die Einzelfederachsen 10 einen spitzen Winkel zur Querrichtung QR aus. So kann gewährleistet werden, dass die ersten Anlageabschnitte 7 der Kontakteinrichtung 4 in Querrichtung QR auf die zweiten Anlageabschnitte 8 des zweiten Bauteils 3 drücken. Die beiden Einzelfederkräfte wirken dabei im Wesentlichen entlang der Querrichtung QR bzw. im spitzen Winkel zur Querrichtung QR einander entgegengerichtet, so dass der Druckkontakt aufrechterhalten bleibt.

Hierbei ist es ebenso vorstellbar, dass lediglich einer der ersten Anlageabschnitte 7 und/oder einer der Federabschnitte 9 an der Kontakteinrichtung 4 und/oder einer der zweiten Anlageabschnitte 8 am zweiten Bauteil 3 angeordnet ist. Zur Aufrechterhaltung des Druckkontakts kann in einem derartigen Ausführungsbeispiel der Abstützabschnitt 15, das Abstützelement 16 und/oder die Druckfeder 17 ähnlich den Figuren 3 - 5 angeordnet werden. Hierfür können der Abstützabschnitt 15, das Abstützelement 16 und/oder die Druckfeder 17 derart angepasst sein, dass der Druckkontakt entlang der Querrichtung QR aufrechterhalten wird.

Zudem ist im Ausführungsbeispiel der Figur 6 das zweite Bauteil 3 als Stanzgitter und/oder Kontaktblech ausgebildet. Dieses kann, wie im Ausführungsbeispiel gezeigt, in dem zweiten Gehäuseabschnitt 22 eingebettet sein. Der zweite Gehäuseabschnitt 22 kann dabei die elektrische Isolation gewährleisten, wobei die elektrische Kontaktierung des zweiten Bauteils 3 lediglich an dem wenigstens einen zweiten Anlageabschnitt 8 und/oder an einem Steckerabgang 24 ermöglicht wird. Über den Steckerabgang 24 kann eine elektrische Leistung in die elektrische Bauteileinheit 1 eingebracht und so das als Motor ausgebildete erste Bauteil 2 betrieben werden.

Da das zweite Bauteil 3 in den zweiten Gehäuseabschnitt 22 eingebettet ist, sind diese entlang der Aufsteckrichtung AR, der Querrichtung QR und der Längsrichtung LR miteinander verschiebefest verbunden. Das erste Bauteil 2, insbesondere der Motor, ist lediglich entlang der Aufsteckrichtung AR verschiebefest mit dem ersten Gehäuseabschnitt 21 verbunden. So kann zumindest eine geringfügige Bewegung, Verkippung und/oder Verdrehung des ersten Bauteils 2, insbesondere bei Belastung, entlang der Längsrichtung LR und/oder der Querrichtung QR gewährleistet werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: elektrische Bauteileinheit
- 2: erstes Bauteil
- 3: zweites Bauteil
- 4: Kontakteinrichtung
- 5: erster Steckverbinder
- 6: zweiter Steckverbinder
- 7: erster Anlageabschnitt
- 8: zweiter Anlageabschnitt
- 9: Federabschnitt
- 10: Einzelfederachse
- 11: Federachse
- 12: Befestigungseinrichtung
- 13: freies Ende
- 14: Ausgleichsabschnitt
- 15: Abstützabschnitt
- 16: Abstützelement
- 17: Druckfeder
- 18: Kontaktelement
- 19: Zusatzelement
- 20: Befestigungsabschnitt
- 21: erster Gehäuseabschnitt
- 22: zweiter Gehäuseabschnitt
- 23: Befestigungselement
- 24: Steckerabgang

- AR: Aufsteckrichtung
- LR: Längsrichtung
- QR: Querrichtung

## Patentansprüche

1. Kontakteinrichtung (4), insbesondere für einen elektromotorischen Stellantrieb, zur Herstellung einer elektrischen Verbindung zwischen einem ersten Bauteil (2) und einem zweiten Bauteil (3) mit einem ersten Steckverbinder (5), der zur Ausbildung eines Stecckontakts auf einen korrespondierenden zweiten Steckverbinder (6) des ersten Bauteils (2) aufsteckbar ist, und
mit wenigstens einem ersten Anlageabschnitt (7), der zur Ausbildung eines Druckkontakts gegen einen zweiten Anlageabschnitt (8) des zweiten Bauteils (3) und/oder eines mit dem zweiten Bauteil (3) verbindbaren Zusatzelements (19) drückbar ist,
wobei wenigstens ein Federabschnitt (9) zwischen dem ersten Steckverbinder (5) und dem ersten Anlageabschnitt (7) und/oder
zwischen einem Befestigungsabschnitt (20) des Zusatzelements (19) und dem zweiten Anlageabschnitt (8) ausgebildet ist, der die zwei Anlageabschnitte (7, 8) mit einer Federkraft aneinander drückt, wenn die beiden Bauteile (2, 3) elektrisch miteinander verbunden sind,
**dadurch gekennzeichnet,**
**dass** der erste Steckverbinder (5) als Steckhülse ausgebildet ist, so dass dieser auf einen als Stecker ausgebildeten zweiten Steckverbinder (6) des ersten Bauteils (2) aufsteckbar ist.

2. Kontakteinrichtung (4) nach dem vorangegangenen Anspruch,
**dadurch gekennzeichnet,**
**dass** der erste Steckverbinder (5) entlang einer Aufsteckrichtung (AR) geöffnet ausgebildet ist,
wobei der erste Steckverbinder (5) vorzugsweise im auf den zweiten Steckverbinder (6) aufgesteckten Zustand entlang der Aufsteckrichtung (AR) ein freies Ende (13) des zweiten Steckverbinders (6) überragt.

3. Kontakteinrichtung (4) nach einem der vorangegangenen Ansprüche,
**dadurch gekennzeichnet,**
**dass** die Federkraft entlang einer Federachse (11) wirkt,
wobei die Federachse (11) vorzugsweise entlang der Aufsteckrichtung (AR), einer Längsrichtung (LR) und/oder einer Querrichtung (QR) verläuft und/oder einen spitzen Winkel mit der Aufsteckrichtung (AR), der Längsrichtung (LR) und/oder der Querrichtung (QR) bildet, und/oder
wobei die Kontakteinrichtung (4) vorzugsweise mehrere Federabschnitte (9) aufweist, aus deren Einzelfederkräften und/oder Einzelfederachsen (10) die entlang der Federachse (11) wirkende Federkraft resultiert.

4. Kontakteinrichtung (4) nach einem der vorangegangenen Ansprüche,
**dadurch gekennzeichnet,**
**dass** die Kontakteinrichtung (4) einen Abstützabschnitt (15) zum Abstützen der Kontakteinrichtung (4) am ersten Bauteil (2) aufweist, wobei der Abstützabschnitt (15) vorzugsweise an dem ersten Steckverbinder (5), zwischen dem ersten Steckverbinder (5) und dem wenigstens einen Federabschnitt (9) und/oder zwischen dem wenigstens einen Federabschnitt (9) und dem ersten Anlageabschnitt (7) angeordnet ist.

5. Kontakteinrichtung (4) nach einem der vorangegangenen Ansprüche,
**dadurch gekennzeichnet,**
**dass** die Federachse (11) mittig zu wenigstens einem der Anlageabschnitte (7, 8), zum ersten Steckverbinder (5) und/oder zum Abstützabschnitt (15) verläuft, und/oder
der wenigstens eine Federabschnitt (9) als wenigstens ein gebogener Federarm ausgebildet ist, an dessen Ende der wenigstens eine Anlageabschnitt (7, 8) angeordnet ist.

6. Kontakteinrichtung (4) nach einem der vorangegangenen Ansprüche,
**dadurch gekennzeichnet,**
**dass** wenigstens einer der Anlageabschnitte (7, 8) als Anlagefläche, Anlagebogen, Anlagewinkel, Anlagepunkt und/oder Anlageende ausgebildet ist und/oder
der wenigstens eine erste Anlageabschnitt (7), insbesondere unmittelbar, an dem wenigstens einen zweiten Anlageabschnitt (8) des zweiten Bauteils (3) und/oder des Zusatzelements (19) anliegt.

7. Kontakteinrichtung (4) nach einem der vorangegangenen Ansprüche,
**dadurch gekennzeichnet,**
**dass** die Kontakteinrichtung (4) mehrere erste Anlageabschnitte (7) und/oder zweite Anlageabschnitte (8) aufweist, so dass die Kontakteinrichtung (4) über mehrere Druckkontakte mit dem zweiten Bauteil (3) elektrisch verbunden ist, und/oder
die Kontakteinrichtung (4) einteilig oder mehrteilig ausgebildet ist, wobei die einteilige Kontakteinrichtung (4) vorzugsweise als Kontaktelement (18) ausgebildet ist und/oder die mehrteilige Kontakteinrichtung (4) vorzugsweise zusätzlich zu dem Kontaktelement (18) das Zusatzelement (19) und/oder eine Druckfeder (17) umfasst.

8. Kontakteinrichtung (4) nach einem der vorangegangenen Ansprüche,
**dadurch gekennzeichnet,**
**dass** das Kontaktelement (18) der mehrteiligen Kontakteinrichtung (4) den ersten Steckverbinder (5) und den wenigstens einen ersten Anlageabschnitt (7) und/oder
das Zusatzelement (19) den wenigstens einen Federabschnitt (9) und den wenigstens einen zweiten Anlageabschnitt (8) aufweist,
wobei das Kontaktelement (18) und das Zusatzelement (19) zum elektrischen Verbinden der zwei Bauteile (2, 3) über den wenigstens einen ersten Anlageabschnitt (7) des Kontaktelements (18) und den wenigstens einen zweiten Anlageabschnitt (8) des Zusatzelements (19) aneinander anliegen.

9. Kontakteinrichtung (4) nach einem der vorangegangenen Ansprüche,
**dadurch gekennzeichnet,**
**dass** das Zusatzelement (19), insbesondere verschiebefest, mittels dem Befestigungsabschnitt (20) am zweiten Bauteil (3) befestigt ist, und/oder
die Kontakteinrichtung (4) einen Ausgleichsabschnitt (14) aufweist, der einen entlang einer Längsrichtung (LR) und/oder Querrichtung (QR) der Kontakteinrichtung (4) gebildeten Versatz des zweiten Steckverbinders (6) zu dem zweiten Anlageabschnitt (8) ausgleicht und/oder überbrückt.

10. Kontakteinrichtung (4) nach einem der vorangegangenen Ansprüche,
**dadurch gekennzeichnet,**
**dass** der Ausgleichsabschnitt (14) den ersten Steckverbinder (5) mit dem Abstützabschnitt (15), dem Federabschnitt (9) und/oder dem ersten Anlageabschnitt (7) verbindet, wobei der Ausgleichsabschnitt (14) vorzugsweise als Ausgleichsschlaufe ausgebildet ist.

11. Kontakteinrichtung (4) nach einem der vorangegangenen Ansprüche,
**dadurch gekennzeichnet,**
**dass** der wenigstens eine Federabschnitt (9) als Blattfeder und/oder Druckfeder (17) ausgebildet ist,
wobei der als Blattfeder ausgebildete Federabschnitt (9) vorzugsweise mit dem ersten Steckverbinder (5), dem ersten Anlageabschnitt (7), dem zweiten Anlageabschnitt (8), dem Abstützabschnitt (15) und/oder dem Befestigungsabschnitt (20) eine zusammenhängende Einheit ausbildet und/oder
der als Druckfeder (17) ausgebildete Federabschnitt (9) auf einen der Anlageabschnitte (7, 8), den ersten Steckverbinder (5) und/oder den Abstützabschnitt (15) einwirkt.

12. Elektrische Bauteileinheit (1), insbesondere elektromotorischer Stellantrieb,
mit einem ersten Bauteil (2), das wenigstens einen zweiten Steckverbinder (6) aufweist,
mit einem zweiten Bauteil (3), das wenigstens einen zweiten Anlageabschnitt (8) aufweist und/oder das mit einem Zusatzelement (19), das den zweiten Anlageabschnitt (8) aufweist, verbindbar ist, und
mit einer Kontakteinrichtung (4) zur Herstellung einer elektrischen Verbindung zwischen dem ersten Bauteil (2) und dem zweiten Bauteil (3), **dadurch gekennzeichnet,**
**dass** die Kontakteinrichtung (4) nach einem der vorangegangenen Ansprüche ausgebildet ist.

13. Elektrische Bauteileinheit (1) nach dem vorangegangenen Anspruch,
**dadurch gekennzeichnet,**
**dass** der erste Steckverbinder (5) als ein in Aufsteckrichtung (AR) vom ersten Bauteil (2) abstehender Stecker und/oder der an dem zweiten Bauteil (3) angeordnete zweite Anlageabschnitt (8) als Anlagefläche ausgebildet ist, und/oder
wenigstens eine Befestigungseinrichtung (12) das erste Bauteil (2) und das zweite Bauteil (3) in Aufsteckrichtung (AR) zueinander verschiebefest befestigt.

14. Verfahren zum Herstellen und/oder Montieren einer elektrischen Bauteileinheit (1), insbesondere eines elektromotorischen Stellantriebs, das folgende Schritte umfasst:
- Aufstecken eines ersten Steckverbinders (5) einer gemäß einem der vorangegangenen Ansprüchen 1 - 11 ausgebildeten Kontakteinrichtung (4) auf einen korrespondierenden zweiten Steckverbinder (6) eines ersten Bauteils (2), insbesondere eines Motors,
- Ausbilden eines Druckkontakts zwischen einem ersten Anlageabschnitt (7) der Kontakteinrichtung (4) und einem zweiten Anlageabschnitt (8) des zweiten Bauteils (3) und/oder eines mit dem zweiten Bauteil (3) verbindbaren Zusatzelements (19), so dass die zwei Bauteile (2, 3) mittels des Druckkontakts elektrisch miteinander verbunden sind.

15. Verwendung einer gemäß einem der vorangegangenen Ansprüchen 1 - 11 ausgebildeten Kontakteinrichtung (4) in einer elektrischen Bauteileinheit (1), insbesondere in einem elektromotorischen Stellantrieb, zum Herstellen einer elektrischen Verbindung zwischen einem ersten Bauteil (2), insbesondere einem Motor, und einem zweiten Bauteil (3).
